# EUROPEAN PATENT APPLICATION

(11) **EP 4 841 859 A1**
(43) Date of publication of application: **18.11.2026**
(21) Application number: 26165362.0
(22) Date of filing: 17.03.2026
(51) Int. Cl.: H02J 7/54, H02J 7/80

(54) **CELL BALANCING CIRCUIT**

(30) Priority: 13.05.2025 JP 2025080495
(71) Applicant: ABLIC Inc., Kitasaku-gun, Nagano 389-0293 (JP)
(72) Inventor: MIYAMOTO, Yasuhiro, Kitasaku-gun, Nagano 4106-73 (JP)
(74) Representative: Winter, Brandl - Partnerschaft mbB

(57) **Abstract**

A cell balancing circuit (100) includes: a voltage dividing circuit (110) connected to both ends of an assembled battery (A) formed of three stages of battery cells (11, 12, 13), the voltage dividing circuit (110) being configured to supply divided voltages (Vd1, Vd2) from connection points of resistance elements (110a, 110b, 110c); and converter pairs (101, 102) each arranged for adjacent battery cells, the converter pairs (101, 102) being configured to respectively receive the divided voltages (Vd1, Vd2). The converter pairs (101, 102) appropriately discharge, from the battery cells (11, 12, 13), cell balancing currents (Ib1, Ib2, Ib3, Ib4) generated in accordance with voltage differences obtained by respectively subtracting voltages of connection points of the battery cells (11, 12, 13) from the divided voltages (Vd1, Vd2).

## Description

### BACKGROUND

### 1. Technical Field

The present disclosure relates to a cell balancing circuit and a battery device.

### 2. Description of the Related Art

There is known an assembled battery in which a plurality of battery cells of a chargeable and dischargeable secondary battery are connected in series. Cell voltages of the plurality of battery cells in the assembled battery are not identical due to, for example, manufacturing variations of the battery cells and variations in self-leakage current of the battery cells. Further, each cell voltage may vary depending on an environmental temperature. Further, in a case in which deterioration progresses while charging and discharging are repeated many times, the assembled battery reaches a state in which a state of health (SOH) is different for each battery cell, and a deviation occurs in the cell voltage of each battery cell. The cell voltage of the battery cell becomes higher during charging but becomes lower during discharging as deterioration progresses.

When the cell voltages of the battery cells are significantly different, in a case in which a charge/discharge control circuit is connected to each battery cell, a battery cell having a high cell voltage immediately becomes overcharged during charging and charging stops, and a battery cell having a low cell voltage immediately becomes over-discharged during discharging and discharging stops. For this reason, efficient charge/discharge may not be performed.

Various proposals have been made to adjust a balance of the cell voltages of the battery cells in such an assembled battery.

For example, there has been proposed an assembled battery control device in which the cell voltage of each battery cell is measured by an analog-to-digital converter (ADC) and a calculation is performed by a signal processing circuit such as a micro processing unit (MPU) to uniformize the cell voltages of the battery cells (see Patent Document 1).

Further, there has been proposed a voltage adjustment device for an assembled battery in which a comparator is used to selectively discharge a battery cell having a voltage higher than an average voltage of the assembled battery so that the cell voltages of all of the battery cells finally become equal (see Patent Document 2).

Further, there has been proposed a voltage balance correction circuit in which a negative feedback loop is formed by a comparator to make a potential difference zero between an average voltage of two adjacent battery cells and an intermediate voltage of the two battery cells, and a battery cell having a high cell voltage is discharged when a voltage difference is caused (see Patent Document 3).

### Related Art

### Patent Document

[Patent Document 1] WO 2015/029283 A1
[Patent Document 2] Japanese Patent Application Laid-open No. 2000-83327
[Patent Document 3] Japanese Patent Application Laid-open No. 2010-63264

### SUMMARY

### Technical Problem

At least one aspect of the present disclosure has an object to provide a cell balancing circuit that can perform a cell balancing operation by current control for three or more battery cells during any one of charging, discharging, or an open state.

### Solution to Problem

A cell balancing circuit according to at least one embodiment of the present disclosure is a cell balancing circuit for controlling a cell balance of three or more battery cells, the cell balancing circuit including: a voltage dividing circuit connected to both ends of an assembled battery in which n stages of battery cells are connected in series, where n≥3, the voltage dividing circuit being configured to supply (n-1) levels of divided voltages from respective connection points of n stages of resistance elements connected in series; and (n-1) converter pairs each arranged for adjacent battery cells, the (n-1) converter pairs being configured to respectively receive the (n-1) levels of divided voltages from the voltage dividing circuit. In the cell balancing circuit, the (n-1) converter pairs are each configured to perform one of discharging, from a predetermined a-th stage battery cell, where a≤n-1, a cell balancing current generated in accordance with a voltage difference obtained by subtracting a sum of cell voltages of the predetermined a-th stage battery cell to an n-th stage battery cell from the divided voltage supplied from a subsequent stage of an a-th stage resistance element corresponding to the predetermined a-th stage battery cell, or discharging, from an (a+1)-th stage battery cell, a cell balancing current generated in accordance with the voltage difference having a reversed polarity. Effects

According to the at least one aspect of the present disclosure, it is possible to provide the cell balancing circuit that can perform the cell balancing operation by current control for three or more battery cells during any one of charging, discharging, or the open state.

### BRIEF DESCRIPTION OF THE DRAWINGS

FIG. 1 is a circuit diagram for illustrating a battery device (during discharging) using a cell balancing circuit according to a first embodiment of the present disclosure.
FIG. 2 is a graph for showing cell balancing current-voltage difference characteristics of a differential voltage-to-current converter in the first embodiment of the present disclosure.
FIG. 3 is a graph for showing cell balancing current-voltage difference characteristics of a differential voltage-to-current converter in the first embodiment of the present disclosure.
FIG. 4 is a graph for showing cell balancing current-voltage difference characteristics of the differential voltage-to-current converters in the first embodiment of the present disclosure.
FIG. 5 is a circuit diagram for illustrating the battery device (during charging) using the cell balancing circuit according to the first embodiment of the present disclosure.
FIG. 6 is a circuit diagram for illustrating the battery device (during an open state) using the cell balancing circuit according to the first embodiment of the present disclosure.
FIG. 7 is a circuit diagram for illustrating a battery device (during discharging) using a cell balancing circuit according to a second embodiment of the present disclosure.
FIG. 8 is a circuit diagram for illustrating the battery device (during charging) using the cell balancing circuit according to the second embodiment of the present disclosure.
FIG. 9 is a circuit diagram for illustrating the battery device (during an open state) using the cell balancing circuit according to the second embodiment of the present disclosure.

### DESCRIPTION OF THE EMBODIMENTS

The present disclosure is based on the finding that, in the assembled battery control device as in Patent Document 1, because communication between the ADC and the MPU and the calculation by the MPU are required, the device is required to be activated constantly or periodically and a current consumption increases. Further, in a system of discharging a cell balancing current determined by an external resistance value based on a switch operation, such as this assembled battery control device, efficiency may decrease because a sequence for switching between an even-numbered cell and an odd-numbered cell is required for a cell balancing operation, and adjacent battery cells cannot be controlled simultaneously. Further, a cell balancing current in the order of 100 mA is required in order to obtain a sufficient voltage balance effect in a cell balancing operation only during charging or startup. A scale of a circuit for discharging such a large current increases.

Further, the present disclosure is based on the finding that, in the voltage adjustment device and the voltage balance correction circuit as in Patent Document 2 and Patent Document 3, a wasted cell balancing current may be discharged unless a high-precision comparator having a small offset error is used. Further, a battery capacity of a healthy battery cell may decrease because a cell balancing operation for making a state of a deteriorated battery cell close to the battery capacity of the healthy battery cell results in making the state of the healthy cell close to the state of the deteriorated cell in a case in which the cell balancing operation is performed during load driving through use of a comparator constantly.

Accordingly, a cell balancing circuit according to at least one embodiment of the present disclosure includes a voltage dividing circuit connected to both ends of an assembled battery in which n stages (n≥3) of battery cells are connected in series. The voltage dividing circuit supplies (n-1) levels of divided voltages from respective connection points of n stages of resistance elements. Further, the cell balancing circuit further includes (n-1) converter pairs each arranged for adjacent battery cells. The (n-1) converter pairs respectively receive the (n-1) levels of divided voltages from the voltage dividing circuit. The converter pairs each include a pair of differential voltage-to-current converters for converting a voltage difference to a current. The converter pairs each discharge, from a predetermined a-th stage (a≤n-1) battery cell, a cell balancing current generated in accordance with a voltage difference obtained by subtracting a sum of cell voltages of a-th stage to n-th stage battery cells from the divided voltage supplied from a subsequent stage of an a-th stage resistance element corresponding to the predetermined a-th stage battery cell. As another example, the converter pairs each discharge, from an (a+1)-th stage battery cell, a cell balancing current generated in accordance with the voltage difference having a reversed polarity.

In this manner, the cell balancing circuit according to the at least one embodiment of the present disclosure can perform a cell balancing operation by current control for three or more battery cells connected in series during any one of charging, discharging, or an open state.

In the following, at least one mode for carrying out the present disclosure is described in detail with reference to the drawings.

The same components are denoted by the same reference symbols in the drawings, and overlapping description thereof is omitted in some cases.

### (First Embodiment)

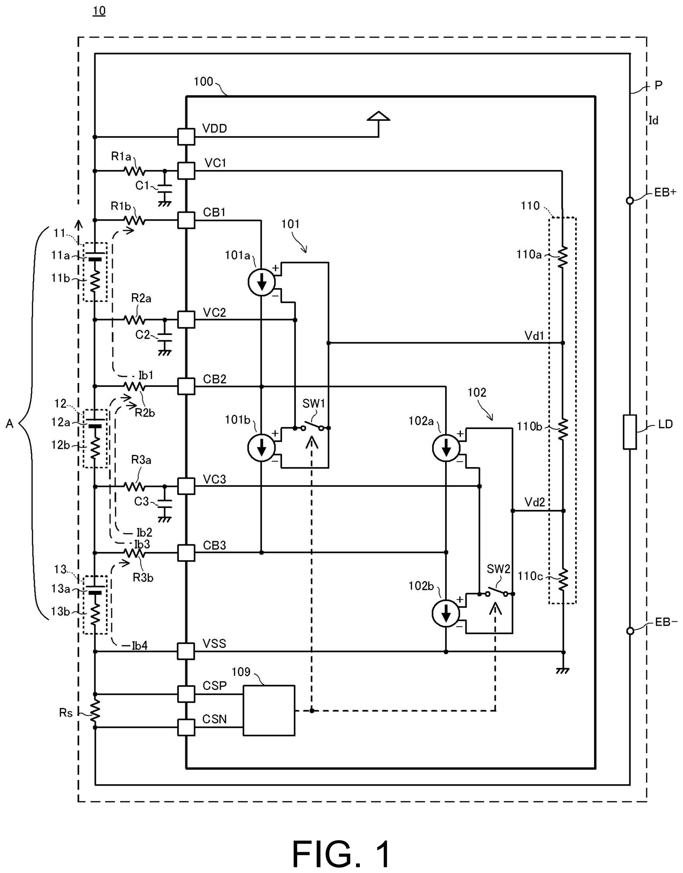

FIG. 1 is a circuit diagram for illustrating a battery device (during discharging) using a cell balancing circuit according to a first embodiment of the present disclosure.

As illustrated in FIG. 1, a battery device 10 includes battery cells 11, 12, and 13, a cell balancing circuit 100, and a current sensing resistance element Rs. The battery cells 11, 12, and 13 are connected in series in the stated order as an assembled battery A. The battery device 10 further includes an external positive terminal EB+ and an external negative terminal EB-. A load LD is connected between the external positive terminal EB+ and the external negative terminal EB- during discharging.

In the battery device 10 during discharging, the battery cells 11, 12, and 13 discharge electricity to the load LD to drive the load LD. A discharge current Id flows through a main current path P to which the battery cells 11, 12, and 13, the current sensing resistance element Rs, and the load LD are connected.

The current sensing resistance element Rs has one end connected to a negative electrode side of the assembled battery A, and another end connected to the external negative terminal EB-. That is, the current sensing resistance element Rs functions to determine whether the battery device 10 is during any one of discharging, charging, or an open state, and is connected in series to the main current path P.

The battery cells 11, 12, and 13 are lithium-ion batteries. The battery cells 11, 12, and 13 generate cell voltages V1, V2, and V3, respectively, depending on a charge/discharge state and a state of health. Further, the battery cells 11, 12, and 13 include batteries 11a, 12a, and 13a and internal resistances 11b, 12b, and 13b, respectively.

The batteries 11a, 12a, and 13a generate a predetermined open-circuit voltage depending on the charge/discharge state. The internal resistances 11b, 12b, and 13b include solution resistance, charge transfer resistance, active material bulk resistance, contact resistance, and the like, and its resistance value increases as deterioration progresses.

A charging voltage of the battery cell can be expressed by the following expression (1). 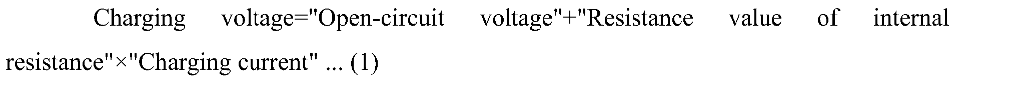 Charging voltage="Open-circuit voltage"+"Resistance value of internal resistance"×"Charging current" ... (1)

A discharging voltage of the battery cell can be expressed by the following expression (2). 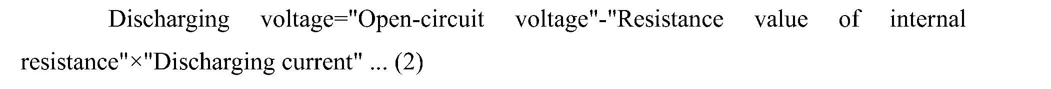 Discharging voltage="Open-circuit voltage"-"Resistance value of internal resistance"×"Discharging current" ... (2)

From the expression (1) and the expression (2), the cell voltage of the battery cell becomes higher during charging but becomes lower during discharging as deterioration progresses.

Accordingly, in a case in which an extent of progress of deterioration of battery cells in an assembled battery is different, a resistance value of the internal resistance is different. A voltage difference may thus be caused in the cell voltage. In a case in which the voltage difference increases, when a charge/discharge control circuit is connected to each battery cell, the charge/discharge control circuit determines that a deteriorated battery cell having a high cell voltage is overcharged when the assembled battery is charged. In this case, charging stops under a state in which a battery cell having a low cell voltage is insufficiently charged. Further, the charge/discharge control circuit determines that a deteriorated battery cell having a low cell voltage is overdischarged when the assembled battery is discharged. In this case, discharging stops under a state in which a battery cell having a high cell voltage is insufficiently discharged. For this reason, efficient charge/discharge may not be performed.

In view of the above, the cell balancing circuit 100 compares the cell voltage and a divided voltage of a voltage dividing circuit, and, in accordance with a voltage difference therebetween, selectively discharges a cell balancing current from the battery cells 11, 12, and 13.

Thus, the cell balancing circuit 100 can perform a cell balancing operation by current control for three or more battery cells during any one of charging, discharging, or an open state.

Terminals of the cell balancing circuit 100 are connected to both ends of each battery cell. Adjustment is performed by discharging a cell balancing current in accordance with a voltage difference between two adjacent battery cells. The cell balancing circuit 100 includes converter pairs 101 and 102, a current monitoring circuit 109, and a voltage dividing circuit 110. The cell balancing circuit 100 further includes a terminal VDD, a terminal VSS, terminals VC1, VC2, and VC3, and terminals CB1, CB2, and CB3.

The terminal VDD is a power supply terminal of the cell balancing circuit 100, and is connected to a positive electrode side of the assembled battery A.

The terminal VSS is a GND terminal of the cell balancing circuit 100, and is connected to the negative electrode side of the assembled battery A to be grounded.

The terminals VC1, VC2, and VC3 are connected to positive electrode sides of the battery cells 11, 12, and 13 through resistance elements R1a, R2a, and R3a, respectively. Resistance values of the resistance elements R1a, R2a, and R3a are the same.

Further, ends of capacitors C1, C2, and C3 each serving as one end thereof are connected to the terminals VC1, VC2, and VC3, respectively. Ends of the capacitors C1, C2, and C3 each serving as another end thereof are grounded.

The terminals CB1, CB2, and CB3 are connected to the positive electrode sides of the battery cells 11, 12, and 13 through resistance elements R1b, R2b, and R3b, respectively, and are each connected to ends of the converter pairs 101 and 102 each serving as one end thereof.

Terminals CSP and CSN are both connected to the current monitoring circuit 109, and are connected to both ends of the current sensing resistance element Rs.

The converter pair 101 includes differential voltage-to-current converters 101a and 101b and a switching element SW1.

The differential voltage-to-current converters 101a and 101b each supply, from an output terminal, a current corresponding to a difference between voltages respectively provided to a non-inverting input terminal and an inverting input terminal.

The differential voltage-to-current converter 101a includes the non-inverting input terminal connected to an output terminal of the voltage dividing circuit 110, and the inverting input terminal connected to the terminal VC2. Accordingly, in the differential voltage-to-current converter 101a, a divided voltage Vd1 is provided to the non-inverting input terminal, and a sum of cell voltages V2 and V3 is provided to the inverting input terminal. Further, the differential voltage-to-current converter 101a includes an input terminal connected to the terminal CB1, and the output terminal connected to the terminal CB2.

The differential voltage-to-current converter 101b includes the non-inverting input terminal connected to the terminal VC2, and the inverting input terminal connected to the output terminal of the voltage dividing circuit 110. Accordingly, in the differential voltage-to-current converter 101b, the sum of the cell voltages V2 and V3 is provided to the non-inverting input terminal, and the divided voltage Vd1 is provided to the inverting input terminal. Further, the differential voltage-to-current converter 101b includes an input terminal connected to the terminal CB2, and the output terminal connected to the terminal CB3.

The converter pair 102 includes differential voltage-to-current converters 102a and 102b and a switching element SW2 similarly to the converter pair 101.

The differential voltage-to-current converters 102a and 102b each supply, from an output terminal, a current corresponding to a difference between voltages respectively provided to a non-inverting input terminal and an inverting input terminal similarly to the differential voltage-to-current converters 101a and 101b.

The differential voltage-to-current converter 102a includes the non-inverting input terminal connected to the output terminal of the voltage dividing circuit 110, and the inverting input terminal connected to the terminal VC3. Accordingly, in the differential voltage-to-current converter 102a, a divided voltage Vd2 is provided to the non-inverting input terminal, and the sum of the cell voltages V2 and V3 is provided to the inverting input terminal. Further, the differential voltage-to-current converter 102a includes an input terminal connected to the terminal CB2, and the output terminal connected to the terminal CB3.

The differential voltage-to-current converter 102b includes the non-inverting input terminal connected to the terminal VC3, and the inverting input terminal connected to the output terminal of the voltage dividing circuit 110. Accordingly, in the differential voltage-to-current converter 102b, the cell voltage V3 is provided to the non-inverting input terminal, and the divided voltage Vd2 is provided to the inverting input terminal. Further, the differential voltage-to-current converter 102b includes an input terminal connected to the terminal CB3, and the output terminal connected to the terminal VSS.

The switching elements SW1 and SW2 are each turned on and off by a signal supplied from the current monitoring circuit 109. In a case in which the switching elements SW1 and SW2 are turned on, the switching elements SW1 and SW2 each perform short-circuiting to prevent a voltage difference from being caused between the non-inverting input terminal and the inverting input terminal of a corresponding one of the differential voltage-to-current converters 101a, 101b, 102a, and 102b. In a case in which the switching elements SW1 and SW2 are turned off, open circuits are achieved. Accordingly, the converter pairs 101 and 102 perform a cell balancing operation in a case in which the switching elements SW1 and SW2 are turned off, and stop the cell balancing operation in a case in which the switching elements SW1 and SW2 are turned on.

The current monitoring circuit 109 is connected to both ends of the current sensing resistance element Rs. The current monitoring circuit 109 determines whether the battery device 10 is during any one of discharging, charging, or an open state by monitoring a current value of a current flowing through the current sensing resistance element Rs, specifically, a current value of a current flowing through the main current path P.

The current monitoring circuit 109 turns on the switching element SW1 and SW2 in a case of determining that the battery device 10 is during discharging. Thus, the current monitoring circuit 109 prevents a voltage difference from being caused by short-circuiting the non-inverting input terminal and the inverting input terminal of each of the differential voltage-to-current converters 101a, 101b, 102a, and 102b to stop the cell balancing operation.

The cell balancing circuit 100 can perform the cell balancing operation even when the switching elements SW1 and SW2 remain turned off without operating the current monitoring circuit 109, but the current monitoring circuit 109 can be operated as required.

The voltage dividing circuit 110 supplies a divided voltage obtained by dividing a voltage applied to both ends. The voltage dividing circuit 110 is connected to both ends of the assembled battery A. The voltage dividing circuit 110 includes one end connected to the terminal VC1, and another end connected to the terminal VSS. Further, the voltage dividing circuit 110 includes resistance elements 110a, 110b, and 110c connected in series. Resistance values of the resistance elements 110a, 110b, and 110c are the same.

Accordingly, the voltage dividing circuit 110 supplies a divided voltage Vd1 of (2/3)×Va to the converter pair 101 and supplies a divided voltage Vd2 of (1/3)×Va to the converter pair 102, where Va represents the sum of the cell voltages V1, V2, and V3.

Accordingly, the converter pair 101 discharges, from the battery cell 11, a cell balancing current Ib1 generated in accordance with a voltage difference obtained by subtracting a voltage of the terminal VC2 (sum of the cell voltages V2 and V3) from the divided voltage Vd1. As another example, the converter pair 101 discharges, from the battery cell 12, a cell balancing current Ib2 generated in accordance with the voltage difference having a reversed polarity.

Further, the converter pair 102 discharges, from the battery cell 12, a cell balancing current Ib3 generated in accordance with a voltage difference obtained by subtracting a voltage of the terminal VC3 (cell voltage V3) from the divided voltage Vd2. As another example, the converter pair 102 discharges, from the battery cell 13, a cell balancing current Ib4 generated in accordance with the voltage difference having a reversed polarity.

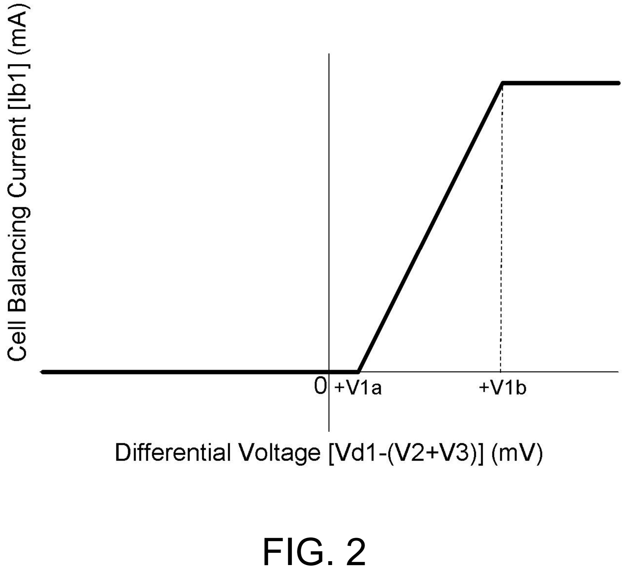

Next, cell balancing current-voltage difference characteristics of the converter pairs 101 and 102 are described with reference to FIG. 2 to FIG. 4.

In FIG. 2 to FIG. 4, the converter pair 101 is described, but the converter pair 102 has cell balancing current-voltage difference characteristics similar to those of the converter pair 101.

FIG. 2 is a graph for showing cell balancing current-voltage difference characteristics of the differential voltage-to-current converter in the first embodiment of the present disclosure. FIG. 2 shows the cell balancing current-voltage difference characteristics of the differential voltage-to-current converter 101a by the solid line. In this graph, the vertical axis represents the cell balancing current Ib1, and the horizontal axis represents a voltage difference (Vd1-(V2+V3)) obtained by subtracting the sum of the cell voltages V2 and V3 from the divided voltage Vd1.

As shown in FIG. 2, the differential voltage-to-current converter 101a does not discharge the cell balancing current Ib1 in a case in which the voltage difference (Vd1-(V2+V3)) is less than +V1a. In a case in which the voltage difference (Vd1-(V2+V3)) is +V1a or more and +Vlb or less, the differential voltage-to-current converter 101a increases the cell balancing current Ib1 as the voltage difference becomes larger. The differential voltage-to-current converter 101a keeps the cell balancing current Ib1 constant in a range in which the voltage difference is larger than +Vlb.

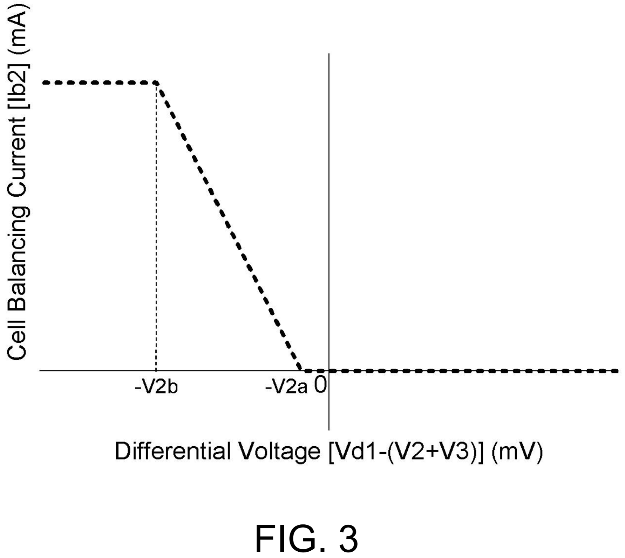

FIG. 3 is a graph for showing cell balancing current-voltage difference characteristics of the differential voltage-to-current converter in the first embodiment of the present disclosure. FIG. 3 shows the cell balancing current-voltage difference characteristics of the differential voltage-to-current converter 101b by the broken line. In this graph, the vertical axis represents the cell balancing current Ib2, and the horizontal axis represents a voltage difference (Vd1-(V2+V3)) obtained by subtracting the sum of the cell voltages V2 and V3 from the divided voltage Vd1.

As shown in FIG. 3, the differential voltage-to-current converter 101b keeps the cell balancing current Ib2 constant in a case in which the voltage difference (Vd1-(V2+V3)) is less than -V2b. In addition, in a case in which the voltage difference (Vd1-(V2+V3)) is -V2b or more and -V2a or less, the differential voltage-to-current converter 101b decreases the cell balancing current Ib2 as the voltage difference becomes larger. The differential voltage-to-current converter 101b does not discharge the cell balancing current Ib2 in a case in which the voltage difference is larger than -V2a.

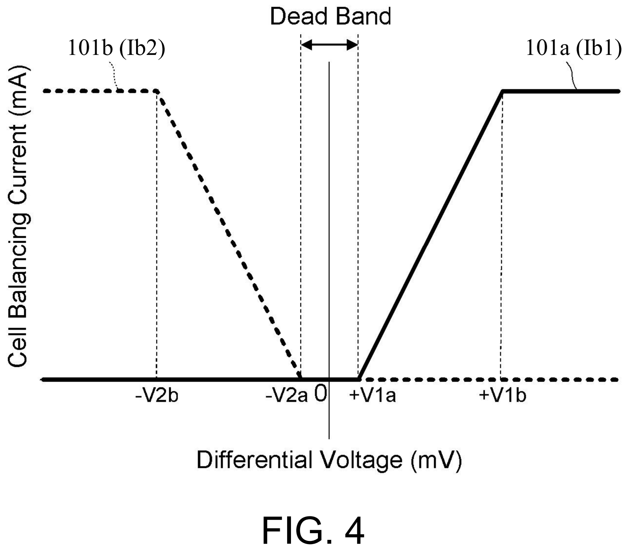

FIG. 4 is a graph for showing cell balancing current-voltage difference characteristics of the differential voltage-to-current converters in the first embodiment of the present disclosure. FIG. 4 shows the cell balancing current-voltage difference characteristics of the differential voltage-to-current converters 101a and 101b shown in FIG. 2 and FIG. 3 in the same graph.

As shown in FIG. 4, a dead band is provided in a range in which the voltage difference is -V2a or more and +V1a or less in the cell balancing current-voltage difference characteristics. The dead band is an insensitive band in which the differential voltage-to-current converters 101a and 101b do not discharge the cell balancing currents Ib1 and Ib2 at a minute voltage difference close to zero.

With this dead band, it is possible to avoid an unstable operation such as discharging the cell balancing current Ib2 by the differential voltage-to-current converter 101b immediately after the differential voltage-to-current converter 101a discharges the cell balancing current Ib1.

Further, the cell balancing currents Ib1 and Ib2 are not discharged simultaneously in a combination of the differential voltage-to-current converters 101a and 101b. For this reason, a loss in which the cell balancing current Ib1 and the cell balancing current Ib2 cancel each other in the vicinity of the terminal CB2 does not occur, and this risk is further reduced by the dead band.

Further, an upper limit value is provided to the differential voltage-to-current converters 101a and 101b so that the cell balancing currents Ib1 and Ib2 are constant in a range in which an absolute value of the voltage difference (Vd1-(V2+V3)) is larger than a predetermined value. Accordingly, a rated operation is performed so as not to discharge a large amount of cell balancing current, and heat generation can be suppressed low.

As described above, the converter pair 102 has the cell balancing current-voltage difference characteristics shown in FIG. 2 to FIG. 4 similarly to the converter pair 101. For this reason, in the converter pair 102, the cell balancing currents Ib3 and Ib4 do not flow simultaneously due to the combination of the differential voltage-to-current converters 102a and 102b.

However, the converter pairs 101 and 102 can perform the respective cell balancing operations to simultaneously supply the cell balancing currents Ib2 and Ib3 to the battery cell 12, and can discharge the battery cell 12 faster.

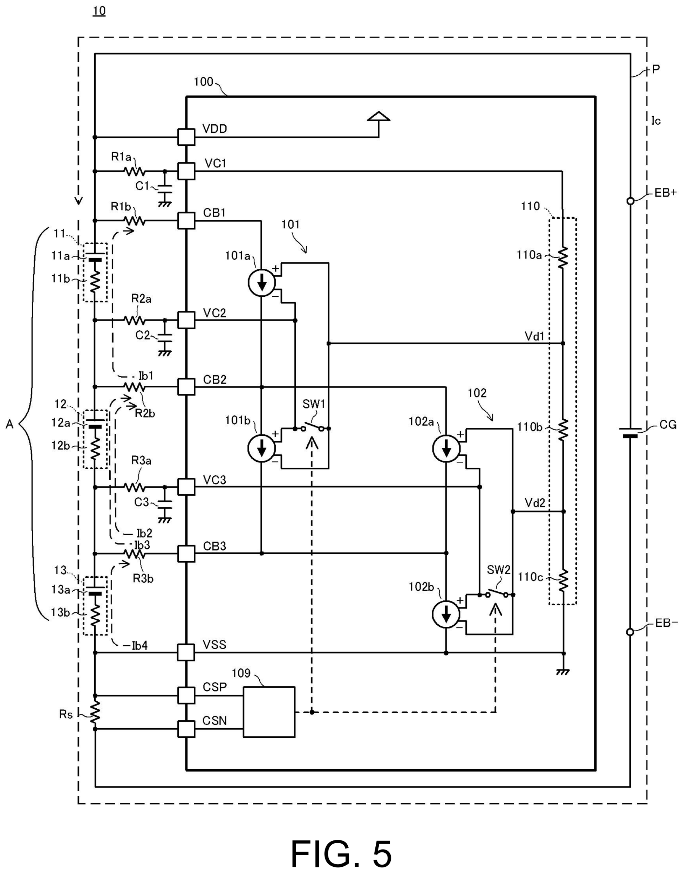

FIG. 5 is a circuit diagram for illustrating the battery device (during charging) using the cell balancing circuit according to the first embodiment of the present disclosure.

As illustrated in FIG. 5, a charger CG is connected between the external positive terminal EB+ and the external negative terminal EB- during charging.

In the battery device 10 during charging, the charger CG charges the battery cells 11, 12, and 13 connected in series. A charging current Ic flows through the main current path P to which the battery cells 11, 12, and 13 and the charger CG are connected.

The cell balancing circuit 100 performs the cell balancing operation by discharging the cell balancing current Ib1 or the cell balancing current Ib2 and the cell balancing current Ib3 or the cell balancing current Ib4 from each battery cell even during charging.

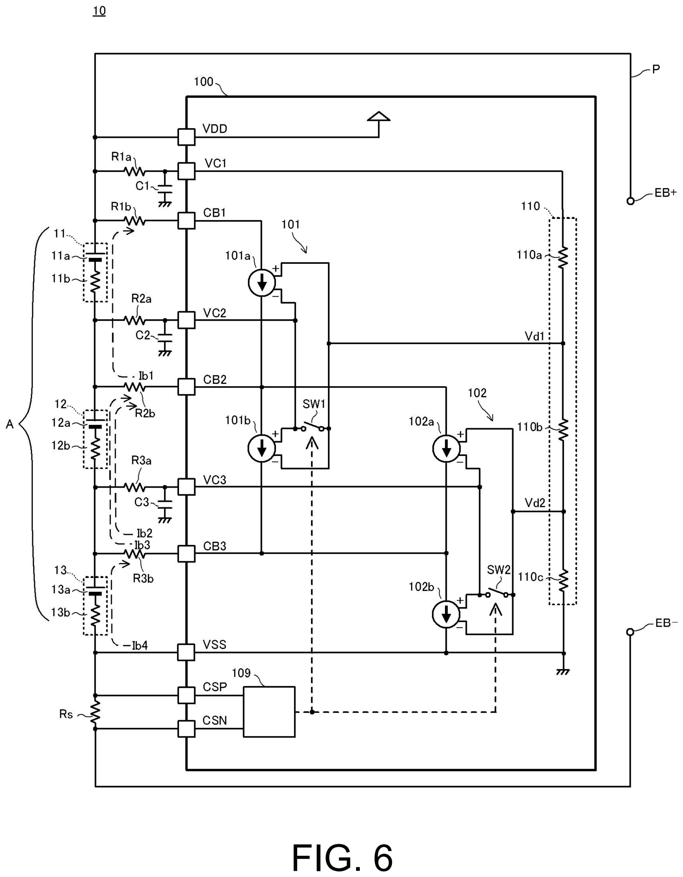

FIG. 6 is a circuit diagram for illustrating the battery device (during an open state) using the cell balancing circuit according to the first embodiment of the present disclosure.

As illustrated in FIG. 6, nothing is connected between the external positive terminal EB+ and the external negative terminal EB- during the open state. For this reason, no current flows through the main current path P to which the battery cells 11, 12, and 13 are connected.

The cell balancing circuit 100 performs the cell balancing operation by discharging the cell balancing current Ib1 or the cell balancing current Ib2 and the cell balancing current Ib3 or the cell balancing current Ib4 from each battery cell even during the open state.

Accordingly, the cell balancing circuit 100 is connected to both ends of the assembled battery A formed of three stages (n=3) of the battery cells 11, 12, and 13. The cell balancing circuit 100 includes the voltage dividing circuit 110 for supplying the divided voltages Vd1 and Vd2 from respective connection points of three stages of the resistance elements 110a, 110b, and 110c. Further, the converter pairs 101 and 102 are each arranged for adjacent battery cells in the cell balancing circuit 100. The converter pairs 101 and 102 appropriately discharge, from the battery cells 11, 12, and 13, the cell balancing currents Ib1, Ib2, Ib3, and Ib4 generated in accordance with voltage differences obtained by respectively subtracting voltages of connection points of the battery cells 11, 12, and 13 from the divided voltages Vd1 and Vd2.

Accordingly, the cell balancing circuit 100 can perform the cell balancing operation by current control for each battery cell during any one of charging, discharging, or the open state. Further, a state of health is less likely to differ for each battery cell because the cell balancing circuit 100 performs the cell balancing operation continuously during long-term use. Thus, a large cell balancing current is not required to be discharged, and a longer life can be achieved as the assembled battery.

### (Second Embodiment)

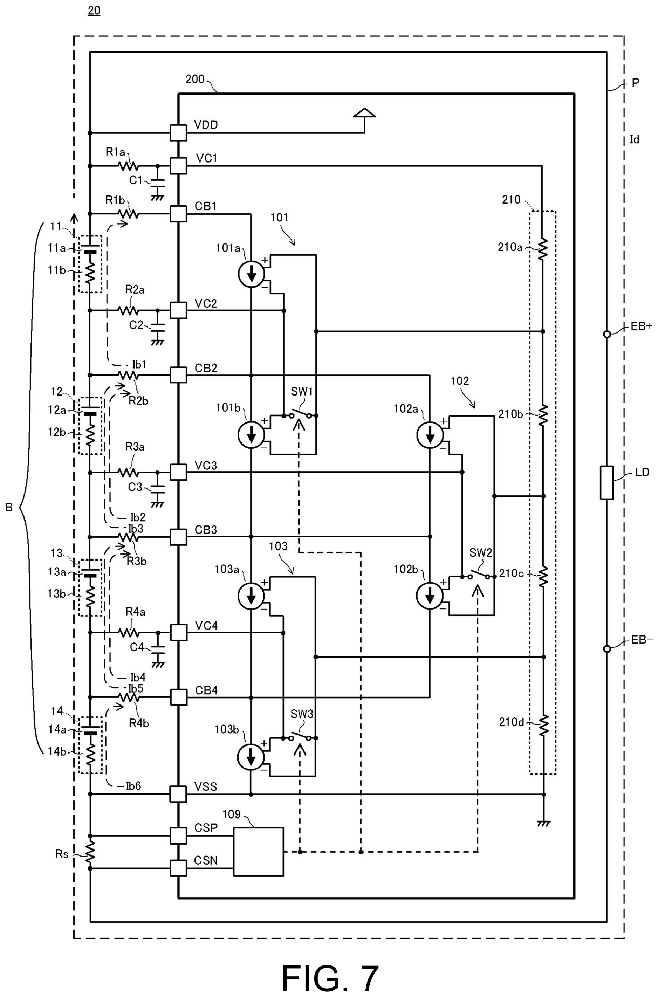

FIG. 7 is a circuit diagram for illustrating a battery device (during discharging) using a cell balancing circuit according to a second embodiment of the present disclosure.

As illustrated in FIG. 7, a battery device 20 according to the second embodiment is similar to the battery device 10 according to the first embodiment except that, in the battery device 10, the cell balancing circuit 100 is replaced with a cell balancing circuit 200 and a battery cell 14 is further included.

Here, the battery cell 14 and the cell balancing circuit 200, which are configurations changed from or added to the first embodiment, are described.

The battery cell 14 is a lithium-ion battery similarly to the battery cells 11, 12, and 13. The battery cell 14 generates a cell voltage V4 depending on a charge/discharge state and a state of health. Further, the battery cell 14 includes a battery 14a and an internal resistance 14b.

The battery 14a generates a predetermined open-circuit voltage depending on the charge/discharge state. The internal resistance 14b includes solution resistance, charge transfer resistance, active material bulk resistance, contact resistance, and the like, and its resistance value increases as deterioration progresses.

Terminals of the cell balancing circuit 200 are connected to both ends of each battery cell including the battery cell 14. Adjustment is performed by discharging a cell balancing current corresponding to a voltage difference between two adjacent battery cells. The cell balancing circuit 200 is similar to the cell balancing circuit 100 except that, in the cell balancing circuit 100, a terminal VC4, a terminal CB4, and a converter pair 103 are further included, and the voltage dividing circuit 110 is replaced with a voltage dividing circuit 210.

Here, the voltage dividing circuit 210, the terminal VC4, the terminal CB4, and the converter pair 103, which are configurations changed from or added to the first embodiment, are described.

The voltage dividing circuit 210 includes resistance elements 210a, 210b, 210c, and 210d connected in series.

The terminal VC4 is connected to a positive electrode side of the battery cell 14 through a resistance element R4a similarly to the terminals VC1, VC2, and VC3. A resistance value of the resistance element R4a is the same as the resistance values of the resistance elements R1a, R2a, and R3a.

Further, one end of a capacitor C4 is connected to the terminal VC4. Another end of the capacitor C4 is grounded.

The terminal CB4 is connected to a positive electrode side of the battery cell 14 through a resistance element R4b similarly to the terminals CB1, CB2, and CB3. The terminal CB4 is connected to one end of the converter pair 103.

The converter pair 103 includes differential voltage-to-current converters 103a and 103b and a switching element SW3 similarly to the converter pairs 101 and 102.

The differential voltage-to-current converters 103a and 103b each supply, from an output terminal, a current corresponding to a difference between voltages respectively provided to a non-inverting input terminal and an inverting input terminal.

The differential voltage-to-current converter 103a includes the non-inverting input terminal connected to an output terminal of the voltage dividing circuit 210, and the inverting input terminal connected to the terminal VC4. Further, the differential voltage-to-current converter 103a includes an input terminal connected to the terminal CB3, and the output terminal connected to the terminal CB4.

The differential voltage-to-current converter 103b includes the non-inverting input terminal connected to the terminal VC4, and the inverting input terminal connected to the output terminal of the voltage dividing circuit 210. Further, the differential voltage-to-current converter 103b includes an input terminal connected to the terminal CB4, and the output terminal connected to the terminal VSS.

The switching element SW3 is turned on and off by a signal supplied from the current monitoring circuit 109 similarly to the switching elements SW1 and SW2. In a case in which the switching element SW3 is turned on, the switching element SW3 performs short-circuiting to prevent a voltage difference from being caused between the non-inverting input terminal and the inverting input terminal of the differential voltage-to-current converter 103a and 103b. In a case in which the switching element SW3 is turned off, an open circuit is achieved. Accordingly, the converter pair 103 performs a cell balancing operation in a case in which the switching element SW3 is turned off, and stops the cell balancing operation in a case in which the switching element SW3 is turned on.

Accordingly, the cell balancing circuit 200 can maintain the capacity of the entire assembled battery without wasting the battery capacity of a healthy battery cell because the switching element SW1, SW2, and SW3 are turned on to stop the cell balancing operation in a case in which the current monitoring circuit 109 determines that the battery device 20 is during discharging.

Further, similarly to the first embodiment, the converter pairs 101 and 102 can perform the respective cell balancing operations to simultaneously supply the cell balancing currents Ib2 and Ib3 to the battery cell 12, and can discharge the battery cell 12 faster. The converter pairs 102 and 103 can perform the respective cell balancing operations to simultaneously supply cell balancing currents Ib4 and Ib5 to the battery cell 13, and can discharge the battery cell 13 faster.

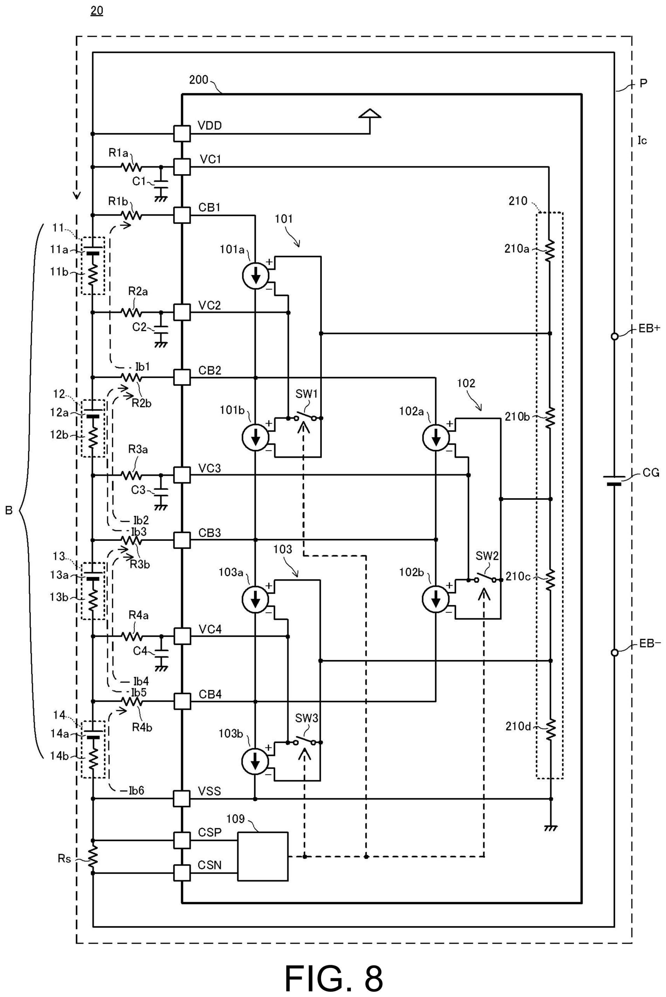

FIG. 8 is a circuit diagram for illustrating the battery device (during charging) using the cell balancing circuit according to the second embodiment of the present disclosure.

As illustrated in FIG. 8, a charger CG is connected between the external positive terminal EB+ and the external negative terminal EB- during charging.

In the battery device 20 during charging, the charger CG charges the battery cells 11, 12, 13, and 14 connected in series. A charging current Ic flows through the main current path P to which the battery cells 11, 12, 13, and 14 and the charger CG are connected.

The cell balancing circuit 200 performs the cell balancing operation by discharging the cell balancing current Ib1 or the cell balancing current Ib2, the cell balancing current Ib3 or the cell balancing current Ib4, and the cell balancing current Ib5 or the cell balancing current Ib6 from each battery cell even during charging.

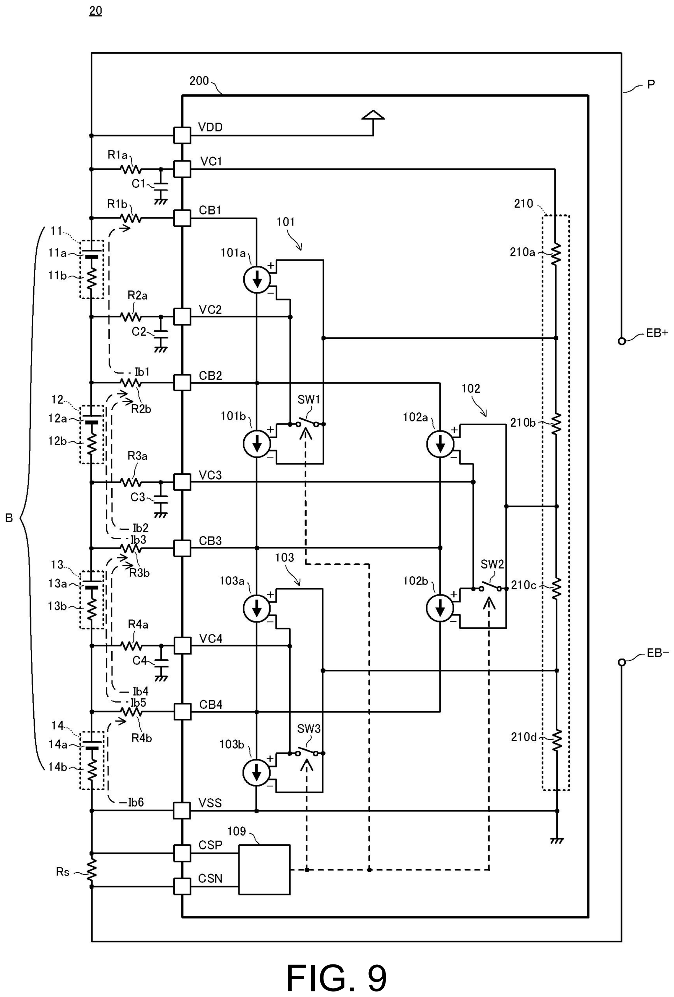

FIG. 9 is a circuit diagram for illustrating the battery device (during an open state) using the cell balancing circuit according to the second embodiment of the present disclosure.

As illustrated in FIG. 9, nothing is connected between the external positive terminal EB+ and the external negative terminal EB- during the open state. For this reason, no current flows through the main current path P to which the battery cells 11, 12, 13, and 14 are connected.

The cell balancing circuit 200 performs the cell balancing operation by discharging the cell balancing current Ib1 or the cell balancing current Ib2, the cell balancing current Ib3 or the cell balancing current Ib4, and the cell balancing current Ib5 or the cell balancing current Ib6 from each battery cell even during the open state.

Accordingly, the battery device 20 can perform the cell balancing operation by current control for each battery cell connected in series even when the number of battery cells increases to four. Specifically, the cell balancing operation can be performed by current control for three or more stages of the battery cells connected in series during any one of charging, discharging, or the open state by increasing the number of converter pairs by one every time the number of battery cells increases by one.

As described above, a cell balancing circuit according to at least one embodiment of the present disclosure includes a voltage dividing circuit. The voltage dividing circuit is connected to both ends of the assembled battery, and supplies (n-1) levels of divided voltages from respective connection points of n stages of resistance elements. Further, the cell balancing circuit further includes (n-1) converter pairs. The converter pairs are each arranged for adjacent battery cells, and respectively receive the (n-1) levels of divided voltages from the voltage dividing circuit. The converter pairs each discharge, from a predetermined a-th stage (a≤n-1) battery cell, a cell balancing current generated in accordance with a voltage difference obtained by subtracting a sum of cell voltages of a-th stage to n-th stage battery cells from a divided voltage supplied from a subsequent stage of an a-th stage resistance element corresponding to the predetermined a-th stage battery cell. As another example, the converter pairs each discharge, from an (a+1)-th stage battery cell, a cell balancing current generated in accordance with the voltage difference having a reversed polarity.

Accordingly, the cell balancing circuit according to the at least one embodiment of the present disclosure can perform a cell balancing operation by current control for three or more stages of the battery cells connected in series during any one of charging, discharging, or an open state.

Battery cells are lithium-ion batteries in each embodiment. However, the battery cells are not limited thereto as long as the battery cells are chargeable and dischargeable batteries.

Further, in each embodiment, one end of the current sensing resistance element Rs is connected to the negative electrode side of the assembled battery, and another end thereof is connected to the external negative terminal EB-. However, any connection of the current sensing resistance element Rs can be adopted as long as the current monitoring circuit 109 can determine a state of the battery cells. Specifically, the current sensing resistance element Rs is only required to be connected in series to the main current path P.

Further, in each embodiment, resistance values of the resistance elements in the voltage dividing circuit are the same. However, divided voltages may be adjusted as appropriate by changing the resistance values of voltage dividing resistors.

### Reference Signs List

10, 20...battery device
11, 12, 13, 14... battery cell
100, 200...cell balancing circuit
101, 102, 103...converter pairs
101a, 101b, 102a, 102b, 103a, 103b...differential voltage-to-current converter
109...current monitoring circuit
110, 210... voltage dividing circuit
110a, 110b, 110c...resistance element
210a, 210b, 210c, 210d...resistance element
A, B...assembled battery
CG...charger
Ib1, Ib2, Ib3, Ib4...cell balancing current
Ic...charging current
Id...discharge current
P...main current path
V1, V2, V3...cell voltage
SW1, SW2, SW3...switching element
LD...load

## Claims

1. A cell balancing circuit (100) for controlling a cell balance of three or more battery cells, the cell balancing circuit comprising:
a voltage dividing circuit (110) connected to both ends of an assembled battery (A) in which n stages of battery cells (11, 12, 13) are connected in series, where n≥3, the voltage dividing circuit being configured to supply (n-1) levels of divided voltages (Vd1, Vd2) from respective connection points of n stages of resistance elements (110a, 110b, 110c) connected in series; and
(n-1) converter pairs (101, 102) each arranged for adjacent battery cells, the (n-1) converter pairs being configured to respectively receive the (n-1) levels of divided voltages from the voltage dividing circuit,
wherein each of the (n-1) converter pairs is configured to either discharge, from a predetermined a-th stage battery cell, where a≤n-1, a cell balancing current generated in accordance with a voltage difference obtained by subtracting a sum of cell voltages of the predetermined a-th stage battery cell to an n-th stage battery cell from the divided voltage supplied from a subsequent stage of an a-th stage resistance element corresponding to the predetermined a-th stage battery cell, or discharge, from an (a+1)-th stage battery cell, a cell balancing current generated in accordance with the voltage difference having a reversed polarity.

2. The cell balancing circuit according to claim 1, wherein each of the (n-1) converter pairs is configured to prevent the cell balancing current from being discharged in a predetermined range including the voltage difference of zero.

3. The cell balancing circuit according to claim 1, wherein each of the (n-1) converter pairs is configured to keep the cell balancing current constant in a range in which an absolute value of the voltage difference is larger than a predetermined value.

4. The cell balancing circuit according to claim 1, further comprising:
a current monitoring circuit (109) connected to both ends of a current sensing resistance element (Rs) connected in series to a main current path (P), the current monitoring circuit being configured to monitor a current value of a current flowing through the current sensing resistance element to determine whether the three or more battery cells are during any one of discharging, charging, or an open state; and
a switching element (SW1, SW2, SW3) to be turned on and off by a signal supplied from the current monitoring circuit, the switching element being configured to perform short-circuiting to prevent the voltage difference from being caused in a case in which the switching element is turned on, and to prevent the short-circuiting from being caused to cause the voltage difference in a case in which the switching element is turned off,
wherein the current monitoring circuit is configured to turn on the switching element in a case of determining that the three or more battery cells are during the discharging, and to turn off the switching element in a case of determining that the three or more battery cells are during one of the charging or the open state.
